# EUROPEAN PATENT SPECIFICATION

(11) **EP 0 621 247 B1**
(45) Date of publication and mention of the grant of the patent: **07.07.1999**
(21) Application number: 94400836.6
(22) Date of filing: 18.04.1994
(51) Int. Cl.: C04B 20/00, E21B 33/13

(54) **Oil-wells cement slurries, their preparation and their use in well cementing operation**
Ölbohrlochzementschlämme, ihre Herstellung und ihre Verwendung in Ölbohrungen
Laitiers de ciment pétroliers, leur préparation et leur utilisation dans les opérations de cimentation des puits de forage

(30) Priority: 21.04.1993 FR 9304802
(43) Date of publication of application: 26.10.1994
(73) Proprietor: SOFITECH N.V., Uccle (1180 Bruxelles) (BE)
(72) Inventor: Maroy, Pierre, F-78530 Buc (FR); Baret, Jean-François, F-75011 Paris (FR)
(74) Representative: Hagel, Francis

(56) References cited:
- WO-A-90/11977
- GB-A- 2 212 489

## Description

The present invention relates to the technical domain of annulus cementing of oil, water and geothermal wells or the like.

These operations have been very well known in the art, as well as in their principle that in their performance ; the great difficulties of their performance have been also well known.

Thus, these data would be really uselessly recalled here. That is why only the essential will be briefly mentioned below.

The well cementing operation consists schematically of preparing at the surface a cement slurry which is then pumped under pressure into the tubing or casing. Such downwardly pumped slurry displaces the drilling mud which circulates up the surface (where it is carried off) through the annulus, i.e. the area between the borehole and the casing.

The cement slurry is itself displaced by an inert fluid, the pumped volumes computations being so as the pumping is stopped when the mud has been replaced by the slurry in the annulus, while a inert fluid is into the inside of the casing. The cement slurry is then let to set into the annulus. This set cement has then two functions : isolation of the different underground zones and casing mechanical support.

It has been appreciated that, to succeed in carrying out such an operation, the mastering or monitoring of the slurry rheology is of primary importance.

The control of very numerous parameters is also of prime concern : fluid loss, free water, settling, thickening time (or "TT"), development of compressive strength, especially at the beginning of the settling, etc..., cement permeability testing against the fluids which degrade it, etc....

It must also be appreciated that, since the temperature and pressure cycles to which the cement slurry is submitted, i.e. surface → downhole → surface, are entirely specific of the considered industry, the preceeding subjects are extremely difficult to solve.

Further more, the adjustment of the cement slurry density is also very important for ensuring the hydrostatic equilibrium. If the density is too low, the risk is that external fluids may migrate towards the casing and may be then the cause of damages. If, on the contrary, the density is too high, the risk is that fracturing fragile formation may occur with serious consequences. These risks and their inherent requirements are also very specific of the considered industry. All this is also very well known in the art.

Numerous additives of different kinds are also known and they are used in the art alone or in various combinations in order to design the better possible slurry for a given well.

This slurry design is never easy. This is often imperfect because many required properties imply using antagonistic means.

On the other hand, a certain degree of uncertainly is always present as far as the bottom hole conditions, for example, maximal temperature, thief zones presence etc..., are concerned. In the prior art, these uncertainties imply, for example, an overdosage of some additive(s) to avoid a major risk.

This implies an important complexity of slurry design, used means and used additives, with the inherent risks and costs.

The present invention provides a design technique of the cement slurries, characterized by a great simplicity, a low cost, and the excellence of the achieved properties. A spectacular improvement of all the useful properties is indeed achieved in a easy manner without producing any disadvantages and especially without any antagonisms between the achieved effects.

The method according to the present invention is characterized in that into the cement slurry is incorporated insoluble particulate additives so that their combination with each other and with the other slurry particulate components, especially with the cement particles, will produce a size range distribution which will deeply change in an unexpected way numerous slurry essential properties.

Most preferably, said particulate additives are of mineral type. The mineral additives are most preferred because of their low cost and their positive effect on the environment. However, the present invention can also use plastic wastes or other wastes, obviously to be crushed according to the expected size range. As a secondary consideration, this may have a benificial effect on the environment by disposing in the ground (obviously controlled) wastes which can not be degraded and otherwise which should be put in a waste disposal area.

In the state of the art, additions of particulate minerals to a cement slurry have been already carried out, as well known, in the civil engineering domain, in order to improve the compressive strength. Among others, the article of F. de Larrard published in "Cement and Concrete Research" vol 19, p.161-172, 1989, will be cited. No comparison can not be obviously stated between the required properties of a civil engineering cement and those required for a "petroleum" cement.

Especially, neither the above mentioned temperature and pressure cycles nor the above mentioned requirements of rheology and of strict density control are met in the civil engineering applications. Likewise, there is no comparition at all between the civil engineering application requirements for free water or fluid loss and the considered applications, as well as the consequences of a deficiency.Thus, the above mentionned article doesn't even mention these properties. Moreover, most of the oilwells cement requirements are not required for civil engineering cement, or they are very lower according to a very different magnitude. Finally, in the civil engineering applications, the size range requirements are very rough (concrete, mortar).

Particulate additives have been also added to oilwells cements, especially to make heavy or lighten the cement (adjustment of the slurry density).

In this case, the size range is not taken into account, or the recommended size range is the opposite of which the present invention recommendes.

However, some conditions, in the oilwells cement domain, exist for which a mineral additive having a particular size range have been tried to be incorporated.

Thus, attempts have been carried out in order to incorporate micro-silica, micro-barium hydroxide ("blanc fixe") or "micronic" manganese oxide (about micron size).

Low cost minerals (ashes etc...) have been also tried to be incorporated, but, in this latter case, without any size range preoccupations.

In the oilwells cements, it has been also known how to use particulate additives such as barium hydroxide or silica flour,or microsilica or agglomerated colloïdal silica but their size range is substantially equal to cement size range, or such as hematite of which the size range is just larger than the cement one.

Moreover, in the state of the art, it must be noted that, indeed, substantially all sensitive properties of a oilwells slurry, especially rheology, fluid loss control and settling, have been controlled up to now (with the above indicated limits) with the help of organic additives.

These additives set a serious problem which has been well known in the art and which is that most of them have a simultaneous and contradictory action on a given property or simultaneously on several properties.

For example, a dispersing agent lowers the viscosity but improves the settling. A fluid loss control agent obviously lowers the fluid loss but increases the viscosity. Moreover, most of recently known and used additives also have an influence on the cement hydration mechanism and then, among others, on the thickening time (TT).

It has been also known that the efficiency range of such additives is often narrow due to an important sensivity to temperature, to ion concentration (salts) of the interstitial water, etc.... Despite long and expansive developments, the result is often a formulation which is suitable only for that temperature and/or that salinity, etc....

This has been admitted in the prior art for several decades. Thus, the number of additives has been multiplied with generally specific conditions of use for each one. In order to mitigate the disadvantages of the more and more important complexity of the possible solutions, numerous softwares have been developed. These softwares only point out the chemical formulation complexity, and make easier the management of this complexity, but without solving the disadvantages.

In a surprising manner, the present invention removes the complexity.

For the first time since several decades, instead of combining together more and more additives which are more and more complex, it has been discovered that numerous essential properties could be met by reasoning in terms of selections and combinations of (preferably mineral) particulate products having different size ranges.

Such (mineral) products used according to the present invention are especially silica, hematite (or other iron oxide), barium hydroxide, and also carbonates, alumina etc..., plastic wastes and other obviously compatible wastes. Especially, the choice could be determined by, for example, the density to achieve. It has been discovered that, by using most often a selected combination of several size ranges of this type combined with the size range of the cement, a converging set of favorable properties have been spontaneously achieved, providing that the size ranges of the considered products are selected, as well as their respective proportions, in order to work at the maximum PVF, or as close as possible (taking into account other stresses such as density or water/cement ratio) to this maximum PVF (PVF being the Packing Volume Fraction), of course according to the selected size ranges and also providing that the proportion of solid matters in relation to the mixing water is selected so that the slurry is located in the hindered settling state. It is known that, in such a state, solid particles behave "collectively" like a porous solid material, the percentages of the different fractions being the same from the top to bottom of the column. On the contrary, out of this state, the different size particles or different density particles whose size is neighbouring will settle separately with different speeds. This hindered settling state corresponds, in practice, to much higher solid matter concentrations in the slurry than that admitted in the prior art.. It has been discovered a high solid matter concentration threshold beyond which the hin dered settling state appears. This threshold depends of course of the chosen size ranges.

It is important to mention that such concentrations that had been judged impossible to use in the prior art (serious problems of too high viscosity and mixability) are usable according to the invention thanks to the choice of conditions that are close to the PVF max.

The invention consists therefore of the combination of three momentous features :
a) use of at least three particulate materials that are insoluble in a preferably aqueous medium, and preferably mineral, one at least of these being an oil cement or a comparable hydraulic binder, the (at least) three size ranges being "disjointed" (see further description)
   and
b) the choice of the proportions in the solid matters defined at a ), in relation to the liquid, preferably water, or "mix water" so that the achieved fluid should be located in the hindered settling state.
   and
c) the choice of the proportions in the solid matters defined at a) between each other, and as a function of their respective size ranges, so that the operations are run at the PVF max of the whole of the considered particles, or as close as possible to the PVF max.

It has been seen that "hindered settling" threshold has never been neither reached nor approched in the prior art of the oil cement.. On the contrary, those skilled in the art used to take care in order to remain to solid matter concentrations that were low enough to be sure to avoid the foreseeable serious problems, due to the far too high foreseeable viscosity and the high sensitivity of the properties, especially the viscosity, towards the liquid content, sensitivity that of course, those skilled in the art always try to reduce.

Concerning the criterion in relation to the PVF, its importance has never been mentioned in the general prior art of particulate materials. Thus, the rheology, the free water, the settling, the fluid loss control, the compressive strength, the mixibility and the permeability have been favourably and simultaneously improved, and all this without substantially needing to use conventional organic additives.

Indeed, the present invention consists of, and allows, combining the above sizes to very favorable values, by combining mineral materials of different, approprietly selected, size ranges with the size range of the cement, after what an accurate adjustment of properties is able to be carried out by adding only small quantities of conventional organic additives.

The means of the present invention radically deviates from all the prior art teachings which have been accumulated and used since several decades with the above mentioned results, and moreover, the installed routine has implied the definition of precise standards such as, for example, API (American Petroleum Institute) for the barium hydroxide and the hematite, from which the present invention also deviates. Contrary to the prior art which consists of adding, in very precise rare cases of applications, fine particles such as micro-silica with the known disadvantage of the increase of the viscosity and of the effect on the cement hydration, the present invention uses (in the above mentionned specific conditions) particles of which dimensions can be large. In the prior art, particles of large diameter have never been added, the general opinion being that a classic differential settling would occur.

This is really the case if prior art teachings are applied, for which only two particle sizes are very generally associated. Without being limited by any theory, it seems that the constant prior art has never achieved to master a too important number of parameters which occur in rheology etc... when there are more than two size ranges.

On the contrary, the present invention is based on a radically opposed concept, called below "multimodal". This concept has allowed mixing simultaneously more than two different size ranges including large dimensions. The result has been that, provided that at least a small quantity of fines had been mixed , and that the three above criterions have been respected at the same time, no significant settling occured, but, moreover, in a very unexpected manner, all the slurry essential properties were really improved without any use of conventional additives.

The "multimodal" concept (as well as its optimal realization which consists of the "multicontinuity" of particulate phases) according to the present invention will be more explained from the following detailed description.

It is linked to the above mentionned PVF feature and is based first on the use of large dimension mineral particles (the "large"). As above mentioned, this absolutely goes against the constant teaching of the oil industry prior art.

The present invention has overcome this prior art technical "bar" by simultaneously using fine (mineral) particles (the "fines") and it has been discovered that the "large", the cement ("medium") and "fines" cooperation stabilized the fluid instead of producing the expected disadvantages (settling, viscosification^{º}) according to the prior art teaching. The invention, according to the three above features, even makes it possible to incorporate "very large" particles.

Moreover, the invention makes it possible, in some cases, as it will be further established, even not to use oil cement any more.

In any cases, the invention significantly reduces the cost of oil cement slurries, which is an imperative that has never been reached for about ten years in oil industry. Obviously, once this "multimodal" concept had been stated, the different combinations between the cement, one or several "fines", one or several "larges", or the like, have been tried to be multiplied. All the results have been convergent.

According to the above principle of the present invention, which consists of incorporating the "large" particles combined with "fine" and possibly "very fine" particles, it has been noted that a "trimodal" combination of the further type (not by way of limitation) :
- cement (average dimension = 10 - 20 micrometers)
- "fine" (average dimension = 1 micrometer)
- "very fine" (average dimension = 0.1 - 0.15 micrometers)
already allowed the almost perfectly achievement of all above mentioned advantages. The absence of conventional additives should be obviously noted. It seems that, in this case, the cement functions as "large" particle.

However, a "tetramodal" combination of the further type (also not by way of limitation) :
- "large" (average dimension about 200-350 micrometers)
- "medium"cement (average dimension = 10 - 20 micrometers)
- "fine " (average dimension = 1 micrometer)
- "very fine" (average dimension = 0.1 - 0.15 micrometer)
furthermore improves all of the desired properties.

Moreover, the addition of large or very large particles such as sand allows, in a spectacular manner, the slurry cost reduction which the industry has tried to achieve without success for about ten years.

It has also been surprisingly noticed that, in spite of the desired very strong solid matter concentration according to the invention, the mixability was considerably improved. In fact, it is known to be an essential property of the oil cement slurries, which is standardized among others by the API.

Other essential asset, the invention makes it possible to reduce the rheology sensitivity to external features (such as for example fluid loss or water income etc...)

Indeed, the cement slurry placed in the annulus undergoes physiochemical exchanges with the mediums that encircle it. It is the well known slurrry "dehydrating" or "bridging" hazard that of course makes it lose all its important properties. This hazard is of course all the higher as the solid matter concentration is high.

It is one of the reasons why, in the prior art, it was used never to work at high solid matter concentrations, in order to minimize this risk.

On the contrary, the invention works above the settling threshold that leads to the hindered settling state. The well established prior art used to teach that a very high dehydrating risk should then appear. On the contrary, it never occurs thanks to the PVF max criterion. The invention improves therefore also the safety of the operations

The "tetramodal" mode will be generally preferred to the "trimodal" mode.

An essential characteristic which has to be respected is that the used size ranges do not widely overlap each other.

In practice, it can be roughly considered that the criterion which has to be respected is that the size range curves have an "offset" of at least a half-peak distance as below depicted.

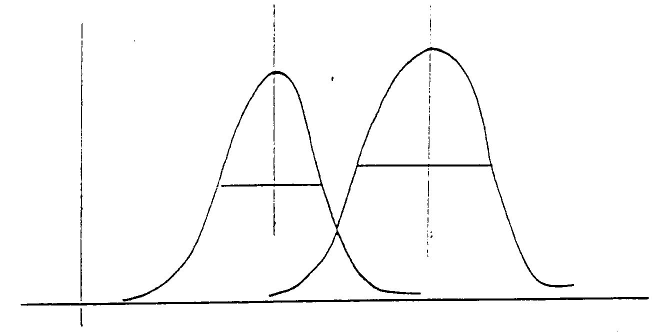

This criterion can be then roughly symbolized by the "disjointed size ranges" notion which will be used below for more clarity.

For example, very good results have been achieved with a "offset" ratio of about 5 to 50 and preferably about 10 between each average dimension, as according to the tri and tetramodal above examples but not by way of limitation.

Obviously, a "pentamodal" mode etc... produces results which are at least as interesting as the results given by a tetra or even tri-modal mode. However, the additional property profit is linked with additional complexity, and these modes, though they are realizable and usable, will be less preferred except for some very particular applications.

The further combinations will also be cited (according to the above mentionned criterions) between the further categories (not by way of limitation) :
- "very large", for example glass maker sand, crushed wastes (average dimension> 1 mm) and/or
- "large", for example sand or crushed wastes (average dimention = 200-800 µm) and/or
- "medium" like a material such as cement or an other hydraulic binder, or crushed wastes (average dimention 10-20 µm) and
- "fine" like, for example, a microcement or some micro fly ashes or some other micro slags (average dimention 0.5-10 µm) and/or
- "very fine" like, for example, a latex or some pigments or some polymer microgels like a usual fluid loss control agent (average dimention 0.05-0.5 µm) and/or
- "ultra fine" like some colloïdal silica or aluminium, etc... (average dimension 7-50nm).
- "ultra fine" particles are only used for example in the cases where an extreme stoppage or plugging is desired in an agressive medium, and for example at a high temperature, when cost is not the most important feature.

In many cases, it will be possible to avoid the use of "very fine" particles. Indeed, the further improvement in the properties, which is brought about by adding "very fine" particles, could be economically unprofitable, especially as far as the filtrate control is concerned. It will be noted that this is possible only thanks to the already momentous improvement achieved according to the invention by a combination that doesn't include any "very fine" particles, the said improvement making it possible to content oneself with very weak amounts of costly organic additives.

In practice, as will be shown by the further examples the main part of usual cementing can be achieved (always with respect for the three basic aforementioned criterions) with combinations of the type (not by way of limitation) :
- very large
- large
- medium (for example, cement)
- fine
   or
- large
- medium (for example, cement)
- fine
   or
- large
- medium (crushed wastes)
- fine (microcement)
   or
- large
- medium (crushed wastes)
- fine (micro fly ash, etc...)
and other combinations that will appear obvious for those skilled in the art

In the very last case, the cement absence will be noted.

According to one embodiment, the present invention generally consists of the combination of :
A - "Large" particles having an average dimension of about 100 - 300, preferably 200 micrometers, selected for example among sand, silica, carbonate, barium hydroxide, hematite, or other iron oxides, carbon, sulfur, and some crushed plastic industrial wastes or others.
B - "Medium" particles (about 10 - 20 micrometers), like for example an oil cement
C - "Fine" particles (about 1 micrometer) selected among :
   - the carbonates (marble, chalk, calcite^{º})
   - the barium hydroxide ("Blanc fixe")
   - the hematite and other iron oxides
   - the silica, the carbon, the sulfur or the like
   - and some fine industrial wastes.
D - "Very fine" particles (about 0.1 micrometer) as for example a latex, a silica condensate (silica fume) or a condensate of manganese oxide fumes.

The fields of relative proportions for the different kinds of particulate materials won't be given here. Indeed, these percentages of A, B, etc... must be established according to the achievement criterion of the PVF max or a PVF as close as possible to the PVF max. It will be assumed that the calculation of the PVF is known and usual. It is based on known equations including a "cutting" of each size range of each component of the particulate blending. In the further examples, the PVF values have been achived by dividing each size range curve of each component into 31 "fractions".

As it has been seen, it will also be very profitable to use "very large" particles (>1 mm) and, in the cases for which the technical problems to be solved are extreme, "ultra fine" particles. A particularly profitable combination will be of the "trimodal" type :
- large sand (glass maker sand) 350 micrometers
- material (some crushed industrial wastes) 10-20 micrometers
- microsilica or industrial wastes 0,5-3 micrometers, the said combination being added with a very slight amount (0.5 % in relation to the solids) of fluid loss control agent, and possibly very slight amounts of other usual organic additives, to optimize and refine the fluid properties

The following examples illustrate the invention without howerer limiting its scope.

### Example 1

A cement slurry with a normal density of 15.8 ppg (1,89 g/cm³) was obtained with the following composition ("trimodal") :
- - Silica (180 µm): 23 % by weight of solids
- - Cement (about 20 µm): 51 % by weight of solids
- Dyckherhoff API classe "G":
- Tropical version "Gulf":
- - Barium hydroxide ("Blanc fixe") (about 1 µm): 26 % by weight of solids
(all the particle dimensions are average values)

A porosity of 59 % was obtained, and the further rheology after mixing was obtained :
- PV: = 25 cP
- Ty: = 57 lb/100 Sqft (27,3 Pa)

It has been noted that, whithout any chemical additives, the rheology is already comparatively low and then is correct.
- Free water :: 0
- Compressive strength :: 3300 psi (23 MPa) after 24 h. at 185°F (85°C).

### Example 2

A lightened cement slurry with a density of 12 ppg (1,44 g/cm³) was obtained with the following composition ("trimodal") :
- - Crushed plastic wastes (300 µm): 24 % by weight of solids
- - Cement (as example 1): 50 % by weight of solids
- - Fine carbonate (about 2 µm): 26 % by weight of solids

The porosity is 56 %.

The main problem of such slurries, i.e. their well known stability defect, is solved without any chemical additives: no settling is observed.

The free water is only 3 ml/250 ml, that means about 1%, which is an excellent result.

The compressive strength is 1450 psi (10 MPa) after 24 h. at 185°F (85°C)

### Example 3

A heavy cement slurry with a density of 19 ppg (2,1 g/cm³) was obtained with the following composition ("trimodal") :
- - Large hematite (300 µm): 58 % by weight of solids
- - Cement (as example 1): 20 % by weight of solids
- - Industrial Waste of iron oxide type (about 2 µm): 22 % by weight of solids

The porosity is 57 %.

The rheology after mixing is :
- PV =: 15 cP
- Ty =: 6 lb/100 sqft (2,9 Pa)

The compressive strength after 24 h. at 185°F (85°C) is 2180 psi (15 MPa)

### Example 4 : Mixability tests.

Different cement slurries have been prepared according to the API standards, with a basis of "Dyckherhoff" cement API class G, Tropical version ("Gulf").

The slurries have been submitted to the mixability test, according to the API standards.

The compositions, properties and results are gathered in the further Table I.

For each test, a comparison was made between a slurry constituted according to the prior art methods, namely without respecting the three above criterions, and by trying to increase the solid matter contents, and a slurry constitued according to the invention. The comparative slurries are clearly impossible to mix , whereas on the contrary, the slurries according to the invention are clearly mixable.

This is quite surprising while taking into account the additives added, and the proportions thereof .

The tests n° 6 et 8 will be particularly noticed.

The test n° 5 (35 % by weight of silica in relation to the cement) corresponds to a slurry that is usually known in the prior art as impossible to use because it is in practice impossible to mix, except in presence of a great amount of a usual distributing agent.

On the contrary, in the test n° 6 according to the invention which contains the same proportion of silica, and has the same density and the same solids/liquid ratio, the size range choice according to the invention criterions leads to a slurry that can be quite easily mixed and cast without any distributing additive.

As far as the last test (n° 8) is concerned, the optimization of the PVF makes it possible, by incorporating 85 % of silica, to obtain a mixable slurry to a high density, where as at this same density the classic silica flour-based composition is impossible to mix.

### Example 5 : Tests with fine iron oxide.

As indicated in the first part of the further Table II, slurries were prepared of "Dyckerhoff" Cement Class G API Tropical Version "Gulf". The achieved densities are also mentionned.

The test results are gathered in the second part of Table II.

An excellent slurry stability will be noticed, particularly while considering the low rheology values.

Among others, the n° 8 test shows an almost complete lack of settling (cf Δp) and free water for a slurry whose shearing threshold Ty and plastic viscosity are very low.

As to test n° 1, it shows that at an extremely high density, the invention still makes it possible to define a perfectly pumpable fluid.

### Example 6

The slurry n° 9 of Table II was took up again
- Cement: 47 % by weight of solids
- Silica (180 µm): 26 % by weight of solids
- Iron oxide (2 µm): 27 % by weight of solids
and this slurry has been tried to be optimized by very little additive amounts :
- fluid loss control agent of type acrylic terpolymer :
   0,91 % by weight of cement.
- setting retarder aagent of type lignosulfonate :
   0,14 % by weight of cement.

At 185°F (85°C), the setting time is 6 h 50 min and the API fluid loss is 111 ml after 30 minutes.

This example shows that the invention makes it possible to obtain a slurry whose properties are good with only little usual additive amounts, therefore at low cost.

**TABLE I**

| Test | Particulate additive * | concentration % BWOC | density in PVF g/cm3 (ppg) | porosity % | solid/liquid ratio | mixability |
|---|---|---|---|---|---|---|
| 1 | FS | 35 | 2.04 (17) 0.732 | 48.34 | 1.075 | NO |
| 2 | SA | 35 | 2.04 (17) 0.765 | 48.34 | 1.075 | YES |
| 3 | FS | 60 | 2.04 (17) 0.740 | 47.62 | 1.105 | NO |
| | HE | 4.78 | | | | |
| 4 | SA | 60 | 2.04 (17) 0.787 | 47.62 | 1.105 | YES |
| | RI | 4.155 | | | | |
| 5 | FS | 35 | 2.16 (18) 0.740 | 47.62 | 1.106 | NO |
| | HEM | 25.7 | | | | |
| 6 | SA | 35 | 2.16 (18) 0.802 | 47.62 | 1.106 | YES |
| | RI | 21.69 | | | | |
| 7 | FS | 35 | 2.28 (19) 0.749 | 47.62 | 1.105 | NO |
| | HEM | 63.21 | | | | |
| 8 | SA | 85.1 | 2.28 (19) 0.847 | 47.62 | 1.105 | YES |
| | RI | 91.36 | | | | |

| | | | | | | |
|---|---|---|---|---|---|---|
| * FS = silica flour (20 micrometers) - SA = sand (180 micrometers) - HE = hematite (100 micrometers) RI = industrial wastes of type iron oxides (about 2 micrometers) - BWOC = by weight of cement | | | | | | |

**TABLE II (1)**

| Test | Cement (fraction in volume) | silica 180 micrometers (fraction in volume) | Iron oxide 2 micrometers (fraction in volume) | density | |
|---|---|---|---|---|---|
| | | | | (ppg) | (g/cm³) |
| 1 | 0.3 | 0.2 | 0.5 | 21.81 | 2.62 |
| 2 | 0.7 | 0.2 | 0.1 | 17.88 | 2.15 |
| 3 | 0.3 | 0.65 | 0.05 | 16.45 | 1.98 |
| 4 | 0.7 | 0.25 | 0.05 | 17.29 | 2.08 |
| 5 | 0.5 | 0.2 | 0.3 | 19.85 | 2.39 |
| 6 | 0.3 | 0.425 | 0.275 | 19.13 | 2.30 |
| 7 | 0.7 | 0.225 | 0.075 | 17.59 | 2.11 |
| 8 | 0.5 | 0.45 | 0.05 | 16.87 | 2.03 |
| 9 | 0.5 | 0.325 | 0.175 | 18.36 | 2.21 |
| Preparation of the slurries - API mixing conditions - porosity 50 % - 295,14g of water and 6g of distributing agent of type polynaphthalene sulfonate | | | | | |

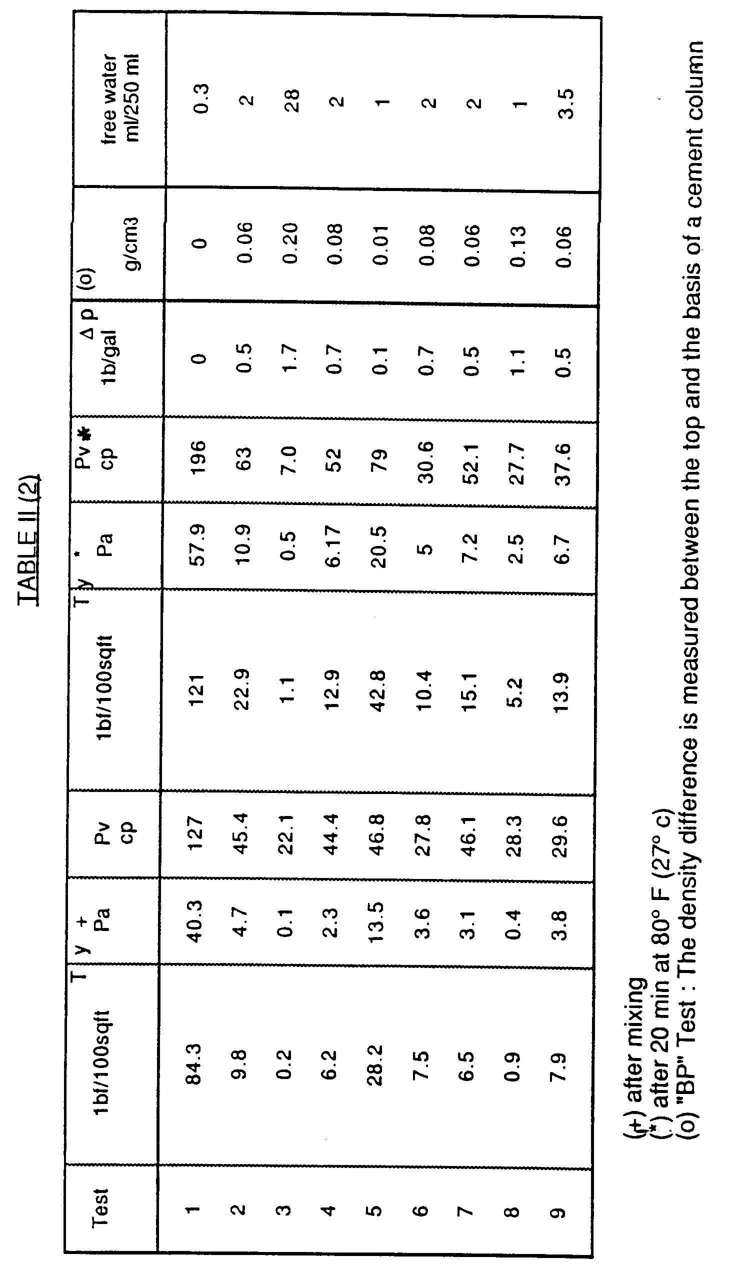

## Claims

1. A cement slurry for cementing oil, water, gas geothermal wells and the like, comprising a mixing fluid such as water and an insoluble particulate mixture comprising of at least three size-distinctive particulate materials selected from a group consisting of:
(i) particles having an average particle size greater than 1 mm, for example glass maker sand or crushed wastes ('very large');
(ii) particles having an average particle size of from 200-800µm, for example sand or crushed wastes ('large');
(iii) particles having an average particle size of from 10-20 µm, for example materials of the type of hydraulic material or other binder, or crushed wastes ('medium');
(iv) particles having an average particle size of from 0.5-10 µm, for example micromaterial, or some micro fly ashes or some other micro slags ('fine');
(v) particles having an average particle size of from 0.05-0.5 µm for example a latex or some pigments or some polymers like a usual fluid loss control agent ('very fine');
(vi) particles having an average particle size of from 7-50 mm for example such as colloidal well dispersed silica or alumina ('ultra-fine').
wherein at least one of the selected particulate material comprises medium particles of a binder such as cement, at least one of the selected particulate material is of an average dimension finer than cement, the relative proportions of the size-distinctive particulate materials are such that the Packing Volume Fraction of the particulate mixture is maximum for the selected combination of solid materials and the concentration of solid particulate materials in the mixing fluid is such that the slurry exhibits a hindered settling state, where the solid particles behave collectively like a porous solid material.

2. A cement slurry according to claim 1, characterised in that it contains a combination of 'very large', 'large', 'medium' and 'fine' particulate materials.

3. A cement slurry according to claim 1, characterised in that it contains a combination of 'very large', 'medium' and 'fine' particulate materials.

4. A cement slurry according to claims 2 or 3, characterised in that the combination further includes 'very fine' particles.

5. A slurry according to any of claims 2 to 4, characterised in that the combination further includes 'ultra-fine' particles.

6. A slurry according to any of the claims 1 to 5, characterised in that it moreover comprises a sufficient proportion of usual additives for oilfield cementing.

7. A cement slurry according claim 1, characterised in that the combination of solid particulate materials consists of:
• 24 %, by weight of the solids, of crushed plastic wastes (about 300 µm),
• 50 %, by weight of the solids, of oil cement (about 20 µm),
• 26 %, by weight of the solids, of fine carbonate (about 2 µm), with a density of 12 ppg (1,44 g/cm³).

8. A cement slurry to according claim 1, characterised in that the combination of solid particulate materials consists of:
• 23%, by weight of the solids, of silica (about 180 µm),
• 51 %, by weight of the solids, of oilfield cement (about 20 µm),
• 26 %, by weight of the solids, of barite (feed white - about 1 µm) with a density of 15,8 ppg (1,89 g/cm³).

9. A cement slurry according to claim 1, characterised in that the combination of solid particulate materials consists of:
• 58 %, by weight of the solids, of large hematite (about 300 µm),
• 20 %, by weight of the solids, of oilfield cement (about 20 µm),
• 22 %, by weight of the solids, of industrial waste of type iron oxide (about 2 µm), with a density of 19 ppg (2,1 g/cm³).

10. A method of cementing oil, gas, water, geothermal wells and the like, characterised in that a slurry according to any of the claims 1 to 9 is injected into the well.

## Patentansprüche

1. Zementaufschlämmung zur Zementierung von Öl-, Wasser-, Gas-, Erdwärmebohrlöchern und dergleichen, umfassend ein Mischfluid wie etwa Wasser und ein unlösliches partikuläres Gemisch, umfassend mindestens drei partikuläre Materialien mit charakteristischen Größen, ausgewählt aus einer Gruppe bestehend aus:
(i) Partikeln mit einer mittleren Partikelgröße von mehr als 1 mm, beispielsweise Glasmachersand oder zerkleinerte Abfälle ("sehr groß"),
(ii) Partikeln mit einer mittleren Partikelgröße von 200 bis 800 µm, beispielsweise Sand oder zerkleinerte Abfälle ("groß")
(iii) Partikeln mit einer mittleren Partikelgröße von 10 bis 20 µm, beispielsweise Materialien vom Typ hydraulisches Material oder ein anderes Bindemittel, oder zerkleinerte Abfälle ("mittel"),
(iv) Partikeln mit einer mittleren Partikelgröße von 0,5 bis 10 µm, beispielsweise Mikromaterial oder gewisse Mikroflugaschen oder gewisse andere Mikroschlacken ("fein"),
(v) Partikeln mit einer mittleren Partikelgröße von 0,05 bis 0,5 µm, beispielsweise ein Latex oder gewisse Pigmente oder gewisse Polymere, wie ein herkömmliches Fluidverlust-Regelungsmittel ("sehr fein"),
(vi) Partikeln mit einer mittleren Partikelgröße von 7 bis 50 nm, wie beispielsweise kolloidales, feinverteiltes Siliziumoxid oder Aluminiumoxid ("ultrafein"),
wobei mindestens ein ausgewähltes partikuläres Material Partikel mittlerer Größe eines Bindemittels wie Zement umfaßt, mindestens ein ausgewähltes partikuläres Material eine mittlere Größe hat, die feiner als Zement ist, die relativen Anteile der partikulären Materialien mit charakteristischen Größen derart sind, daß der Packvolumengehalt des partikulären Gemisches für die ausgewählte Kombination von Festmaterialien maximal ist, und die Konzentration von festen partikulären Materialien in dem Mischfluid derart ist, daß die Aufschlämmung einen behinderten Sedimentationszustand aufweist, wobei die festen Partikel sich kollektiv wie ein poröses Festmaterial verhalten.

2. Zementaufschlämmung nach Anspruch 1, dadurch gekennzeichnet, daß sie eine Kombination von "sehr großen", "großen", "mittleren" und "feinen" partikulären Materialien enthält.

3. Zementaufschlämmung nach Anspruch 1, dadurch gekennzeichnet, daß sie eine Kombination von "sehr großen", "mittleren" und "feinen" partikulären Materialien enthält.

4. Zementaufschlämmung nach Anspruch 2 oder 3, dadurch gekennzeichnet, daß die Kombination weiterhin "sehr feine" Partikel enthält.

5. Zementaufschlämmung nach einem der Ansprüche 2 bis 4, dadurch gekennzeichnet, daß die Kombination weiterhin "ultrafeine" Partikel enthält.

6. Zementaufschlämmung nach einem der Ansprüche 1 bis 5, dadurch gekennzeichnet, daß sie weiterhin einen ausreichenden Anteil herkömmlicher Ölfeldzementierzusätze umfaßt.

7. Zementaufschlämmung nach Anspruch 1, dadurch gekennzeichnet, daß die Kombination der festen partikulären Materialien zu
• 24 %, bezogen auf das Gewicht der Feststoffe, aus zerkleinerten Kunststoffabfällen (etwa 300 µm),
• 50 %, bezogen auf das Gewicht der Feststoffe, aus Ölfeldzement (etwa 20 µm),
• 26 %, bezogen auf das Gewicht der Feststoffe, aus feinem Carbonat (etwa 2 µm) mit einer Dichte von 12 ppg (1,44 g/cm³) besteht.

8. Zementaufschlämmung nach Anspruch 1, dadurch gekennzeichnet, daß die Kombination der festen partikulären Materialien zu
• 23 %, bezogen auf das Gewicht der Feststoffe, aus Siliziumoxid (etwa 180 µm),
• 51 %, bezogen auf das Gewicht der Feststoffe, aus Ölfeldzement (etwa 20 µm),
• 26 %, bezogen auf das Gewicht der Feststoffe, aus Baryt (Blanc-fixe, etwa 1 µm) mit einer Dichte von 15,8 ppg (1,89 g/cm³) besteht.

9. Zementaufschlämmung nach Anspruch 1, dadurch gekennzeichnet, daß die Kombination der festen partikulären Materialien zu
• 58 %, bezogen auf das Gewicht der Feststoffe, aus grobem Haematit (etwa 300 µm),
• 20 %, bezogen auf das Gewicht der Feststoffe, aus Ölfeldzement (etwa 20 µm),
• 22 %, bezogen auf das Gewicht der Feststoffe, aus Industrieabfall vom Eisenoxid-Typ(etwa 2 µm) mit einer Dichte von 19 ppg (2,1 g/cm³) besteht.

10. Verfahren zur Zementierung von Öl-, Wasser-, Gas-, Erdwärmebohrlöchern und dergleichen, dadurch gekennzeichnet, daß eine Aufschlämmung nach einem der Ansprüche 1 bis 9 in das Bohrloch eingespritzt wird.

## Revendications

1. Laitier de ciment pour cimenter des puits de pétrole, d'eau, de gaz, géothermiques et similaires, comprenant un fluide de mélange tel que de l'eau et un mélange particulaire insoluble comprenant au moins trois matières particulaires se distinguant par leur taille choisies dans le groupe constitué par :
(i) les particules ayant une taille moyenne de particule supérieure à 1 mm, par exemple du sable de verrerie ou des déchets broyés ("très grandes") ;
(ii) les particules ayant une taille moyenne de particule de 200 à 800 µm, par exemple du sable ou des déchets broyés ("grandes") ;
(iii) les particules ayant une taille moyenne de particule de 10 à 20 µm, par exemple des matières de type matière hydraulique ou un autre liant, ou des déchets broyés ("moyennes") ;
(iv) les particules ayant une taille moyenne de particule de 0,5 à 10 µm, par exemple une micro-matière, ou certaines micro-cendres volantes ou certains autres micro-laitiers ("fines") ;
(v) les particules ayant une taille moyenne de particule de 0,05 à 0,5 µm, par exemple un latex ou certains pigments ou certains polymères tels qu'un agent habituel régulant la perte de fluide ("très fines") ;
(vi) les particules ayant une taille moyenne de particule de 7 à 50 nm, telles que par exemple la silice ou l'alumine colloïdales très dispersées ("ultra-fines"),
dans lequel au moins l'une des matières particulaires choisies comprend des particules moyennes d'un liant tel que du ciment, au moins l'une des matières particulaires choisies a une dimension moyenne plus fine que le ciment, les proportions relatives des matières particulaires se distinguant par leur taille sont telles que la fraction volumique de tassement (〈〈 Packing Volume Fraction 〉〉) du mélange particulaire est maximale pour la combinaison choisie de matières solides, et la concentration des matières particulaires solides dans le fluide de mélange est telle que le laitier présente un état dans lequel la sédimentation est empêchée (〈〈 hindered settling state 〉〉), les particules solides se comportant alors collectivement comme une matière solide poreuse.

2. Laitier de ciment selon la revendication 1, caractérisé en ce qu'il contient une combinaison de matières particulaires "très grandes", "grandes", "moyennes' et "fines".

3. Laitier de ciment selon la revendication 1, caractérisé en ce qu'il contient une combinaison de matières particulaires "très grandes", "moyennes" et "fines".

4. Laitier de ciment selon les revendications 2 ou 3, caractérisé en ce que la combinaison inclut en outre des particules "très fines".

5. Laitier selon l'une quelconque des revendications 2 à 4, caractérisé en ce que la combinaison inclut en outre des particules "ultra-fines".

6. Laitier selon l'une quelconque des revendications 1 à 5, caractérisé en ce qu'il comprend en outre une proportion suffisante d'additifs habituels pour la cimentation d'un champ pétrolifère.

7. Laitier de ciment selon la revendication 1, caractérisé en ce que la combinaison de matières particulaires solides est constituée par :
• 24 % en poids, par rapport aux matières solides, de déchets de plastique broyés (environ 300 µm),
• 50 % en poids, par rapport aux matières solides, de ciment pour champ pétrolifère (environ 20 µm),
• 26 % en poids, par rapport aux matières solides, de carbonate fin (environ 2 µm) ayant une masse volumique de 1,44 g/cm³ (12 ppg).

8. Laitier de ciment selon la revendication 1, caractérisé en ce que la combinaison de matières particulaires solides est constituée par :
• 23 % en poids, par rapport aux matières solides, de silice (environ 180 µm),
• 51 % en poids, par rapport aux matières solides, de ciment pour champ pétrolifère (environ 20 µm),
• 26 % en poids, par rapport aux matières solides, de barytine (blanc fixe - environ 1 µm) ayant une masse volumique de 1,89 g/cm³ (15,8 ppg).

9. Laitier de ciment selon la revendication 1, caractérisé en ce que la combinaison de matières particulaires solides est constituée par :
• 58 % en poids, par rapport aux matières solides, d'hématite grande (environ 300 µm),
• 20 % en poids, par rapport aux matières solides, de ciment pour champ pétrolifère (environ 20 µm),
• 22 % en poids, par rapport aux matières solides, de déchets industriels de type oxyde de fer (environ 2 µm) ayant une masse volumique de 2,1 g/cm³ (19 ppg).

10. Procédé pour cimenter des puits de pétrole, de gaz, d'eau, géothermiques et similaires, caractérisé en ce qu'un laitier selon l'une quelconque des revendications 1 à 9 est injecté dans le puits.
